(19) Europäisches Patentamt
European Patent Office
Office européen des brevets

(11) Veröffentlichungsnummer: **0 652 238 A2**

# (12) EUROPÄISCHE PATENTANMELDUNG

(21) Anmeldenummer: **94116963.3**

(51) Int. Cl.[6]: **C08F 30/02**, C08L 43/02

(22) Anmeldetag: **27.10.94**

(30) Priorität: **05.11.93 DE 4337783**

(43) Veröffentlichungstag der Anmeldung:
**10.05.95 Patentblatt 95/19**

(84) Benannte Vertragsstaaten:
**DE ES FR GB IT NL SE**

(71) Anmelder: **BASF Aktiengesellschaft**
**Carl-Bosch-Strasse 38**
**D-67063 Ludwigshafen (DE)**

(72) Erfinder: **Rupaner, Robert, Dr.**
**Saalburgstrasse 7**
**D-61476 Kronberg (DE)**

(54) **Verfahren zur Herstellung von Polymerisaten von Vinylphosphonsäureestern.**

(57) Ein hauptsächlich aus Vinylphosphonsäureestern des Methanols und/oder Ethanols bestehendes Monomerengemisch wird unter Verwendung eines Salzes der Peroxodischwefelsäure als Polymerisationsinitiator bei einer Polymerisationstemperatur von 80 bis 150 °C in wäßriger Lösung radikalisch polymerisiert.

EP 0 652 238 A2

Vorliegende Erfindung betrifft ein Verfahren zur Herstellung von Polymerisaten von Vinylphosphonsäureestern.

Gemäß der DE-PS 11 06 963 und der DE-A 25 12 701 sind Ester der Vinylphosphonsäure nur schwer homo- und copolymerisierbar. D.h. werden derartige Polymerisationen versucht, verbleibt eine beträchtliche Menge an nicht umgesetztem Vinylphosphonat. Die DE-A 25 12 701 lehrt daher, durch nachträglichen Zusatz von "nachfassenden" Monomeren im Rahmen von radikalischen Polymerisationen nicht umgesetztes Vinylphosphonat zu beseitigen. Ferner empfiehlt die DE-A 25 12 701 Polyvinylphosphonsäureester als flammhemmende Mittel.

Die DE-A 32 48 491 betrifft die radikalische Polymerisation von Vinylphosphonsäure oder ihren Salzen (deren Polymerisationsverhalten demjenigen von Vinylphosphonaten ähnlich sein sollte) in Wasser. Gemäß der Lehre der DE-A 32 48 491 ist eine diesbezügliche Verwendung von Salzen der Peroxodischwefelsäure als Polymerisationsinitiator nicht empfehlenswert, da bei Verwendung dieser Initiatoren Restmonomerengehalte von weit über 20 % resultieren.

Die DE-PS 10 29 156 betrifft ein Verfahren zur Herstellung von Polyvinylphosphonsäureestern durch radikalische Polymerisation von Vinylphosphonsäurehalogeniden in organischer Lösung und anschließende Alkoholyse. Nachteilig an dieser Verfahrensweise ist insbesondere die im Rahmen der Alkoholyse einhergehende Halogenwasserstoffbildung, der nicht verschwindende Halogengehalt der resultierenden Polymerisate, sowie das Erfordernis eines organischen Lösungsmittels zur Polymerisation.

Die EP-A 509 304 betrifft die radikalische Pfropfpolymerisation von Vinylphosphonsäuredimethylester auf eine polymere Propfgrundlage, um letztere flammfest auszurüsten. Der geringe Phosphorgehalt im Endprodukt der beispielhaften Ausführungsform reflektiert die wenig ausgeprägte Neigung des Vinylphosphonsäuredimethylesters zur radikalischen Polymerisation.

G.S. Kolesinkov u.a. informieren in Vysokomol. Soed. 12 (1970), Serie A, Nr. 5, S. 1051 bis 1061 über die Kinetik der Polymerisation von Vinylphosphonsäureestern mittels Azobisisobutyronitril in nicht wäßrigem Polymerisationsmedium.

Aus Vysokomol. Soedin., Ser. A, 16 (1), 71-6 (1974) ist die anionische Polymerisation von Vinylphosphonsäureestern in organischen Lösungsmitteln bekannt. Nachteilig an diesen Verfahrensweisen ist der Bedarf eines organischen Lösungsmittels. Ferner werden sehr hochmolekulare Polymere erhalten.

Sb. Nekot. Probl. Org. Khim., Mater. Nauh. Sess., Inst. Org. Fiz. Khim., Akad. Nauk SSSR, 85-9 (1972), Ed.: Vereshchagin, A.N. Akad. Nauk SSSR, Inst. Org. Fiz. Khim.: Kazan, USSR betrifft die anionische Polymerisation von Vinylphosphonsäureestern in der Schmelze. Die erreichbaren Ausbeuten betragen lediglich 40 bis 89 %. Nachteilig ist ferner die bei allen Substanzpolymerisationen bestehende Problematik der Abfuhr der Polymerisationswärme.

Die Aufgabe der vorliegenden Erfindung bestand daher darin, einerseits ein möglichst einfaches Verfahren zur Herstellung von Polymerisaten von Vinylphosphonsäureestern zur Verfügung zu stellen, im Rahmen dessen andererseits nur eine geringe Menge an nicht umgesetztem Vinylphosphonat verbleibt.

Demgemäß wurde in überraschender Weise ein Verfahren zur Herstellung von Polymerisaten von Vinylphosphonsäureestern gefunden, das dadurch gekennzeichnet ist, daß man eine Monomerenzusammensetzung bestehend aus

75 bis 100 Gew.-% wenigstens eines Monomeren der allgemeinen Formel I

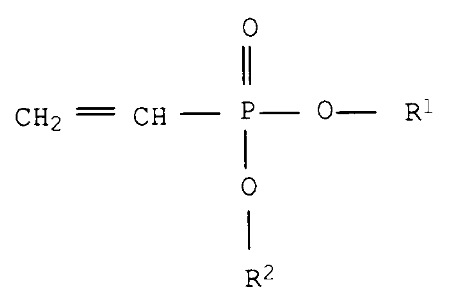

(I),

mit $R^1$, $R^2$ = unabhängig voneinander -H, $-CH_3$ oder $-C_2H_5$, aber nicht gleichzeitig -H,

und/oder eines deren Salze (Monomere a),

0 bis 20 Gew.-% Vinylsulfonsäure und/oder deren Salze (Monomere b) und

0 bis 5 Gew.-% sonstige radikalisch copolymerisierbare Monomere (Monomere c)

- in wäßriger Lösung,

- nach der Methode der radikalischen Polymerisation,
- bei einer Polymerisationstemperatur von 80 bis 150 °C und
- unter Verwendung eines Salzes der Peroxodischwefelsäure als Polymerisationsinitiator polymerisiert und anschließend das Wasser in an sich bekannter Weise entfernt.

Als Monomeres a wird vorzugsweise der Vinylphosphonsäuredimethylester verwendet. Mit Vorteil beträgt sein Gewichtsanteil, bezogen auf die Gesamtmenge der zu polymerisierenden Monomeren, wenigstens 50 Gew.-%. Besonders bevorzugt ist die Homopolymerisation des Vinylphosphonsäuredimethylesters. Die Synthese des Vinylphosphonsäuredimethylesters gelingt z.B. leicht durch radikalische Addition von Dimethylphosphit an Vinylacetat unter Bildung von 2-Acetoxiethanphosphonsäuredimethylester. Die nachfolgende Pyrolyse bei 180 - 200 °C führt gemäß der Lehre der DE-A 30 01 894 zu einem Gemisch verschiedener Pyrolyseprodukte, die gegebenenfalls weiter zu der reinen Vinylphosphonsäure hydrolysiert werden können. Eine alternative katalytische Eliminierung von Essigsäure in der Gasphase gemäß der EP-A 456 049 führt nach destillativer Abtrennung von Essigsäure zu reinem Vinylphosphonsäuredimethylester.

Als Salze der Monomeren der allgemeinen Formel I eignen sich insbesondere deren Alkalimetallsalze (insbesondere die Kalium- und Natriummetallsalze) und Ammoniumsalze.

Geeignete Monomere b sind u.a. Vinylsulfonsäure, deren Ammoniumsalz und deren Alkalimetallsalze, insbesondere das Kalium- und das Natriummetallsalz. Wesentlich ist nur, daß die Comonomeren b, ebenso wie die Monomeren a, im wäßrigen Polymerisationsmedium in der zu copolymerisierenden Menge unter den Polymerisationsbedingungen löslich sind.

Dies gilt in entsprechender Weise für die Monomeren c, d.h. in der Regel kommen als Monomere c alle diejenigen in Betracht, die wenigstens eine ethylenisch ungesättigte C=C Bindung aufweisen und bei 25 °C, 1 atm in Wasser zu wenigstens 5 Gew.-%, bezogen auf die Lösung, löslich sind. Vorzugsweise beträgt ihre Wasserlöslichkeit unter diesen Bedingungen wenigstens 15 Gew.-%, besonders bevorzugt wenigstens 30 Gew.-%. Geeignete Comonomere sind daher insbesondere 3 bis 6 C-Atome aufweisende $\alpha,\beta$-monoethylenisch ungesättigte Carbonsäuren und deren Salze (insbesondere deren Ammonium- u. Alkalimetallsalze), z.B. Acrylsäure, Methacrylsäure o. Itaconsäure, sowie die Amide dieser Säuren aber auch die Monoester dieser Säuren mit niederen mehrwertigen Alkoholen.

Vorzugsweise umfaßt die zu polymerisierende Monomerenzusammensetzung keine Monomeren c und ganz besonders bevorzugt auch keine Monomeren b.

Liegt die Polymerisationstemperatur oberhalb von 100 °C muß die Polymerisation unter Anwendung von Druck erfolgen. Dies hat mit zunehmendem Ausmaß eine Beeinträchtigung der Hydrolysebeständigkeit der resultierenden Polymerisate zur Folge. Vorzugsweise beträgt die Polymerisationstemperatur daher 85 bis 95 °C.

Der peroxidisulfatische Polymerisationsinitiator ist üblicherweise in Mengen von 1 bis 5 Gew.-%, bezogen auf die Gesamtmenge der zu polymerisierenden Monomeren, anzuwenden. Vorzugsweise liegt die Einsatzmenge bei 2 bis 5, ganz besonders bevorzugt bei 3 bis 4 Gew.-%. Selbstverständlich muß der verwendete Polymerisationsinitiator in der einzusetzenden Menge im Reaktionssystem löslich sein. D.h. in der Regel kommen solche Salze der Peroxodischwefelsäure ($H_2S_2O_8$) in Betracht, deren Löslichkeit in Wasser bei 25 °C, 1 atm wenigstens 1 Gew.-%, vorzugsweise $\geqq$ 5 Gew.-% bezogen auf die Lösung, beträgt. Dies ist z.B. für Ammoniumperoxodisulfat sowie für die Alkalimetallperoxodisulfate, insbesondere das Kalium- und Natriummetallsalz, gegeben. Zusätzlich zu dem erfindungsgemäß zu verwendenden Salz der Peroxodischwefelsäure können selbstverständlich weitere an sich übliche radikalische Polymerisationsinitiatoren mitverwendet werden. Der pH-Wert des wäßrigen Polymerisationsmediums ist üblicherweise der Eigen-pH-Wert des Reaktionssystems. Er beträgt normalerweise 7 bis 1.

Vorzugsweise wird das erfindungsgemäße Polymerisationsverfahren unter Inertgasatmosphäre durchgeführt. Das erfindungsgemäße Polymerisationsverfahren kann z.B. ansatzweise durchgeführt werden, indem man die Gesamtmenge der zu polymerisierenden Monomeren in wäßriger Lösung ins Polymerisationsgefäß vorlegt, auf die Polymerisationstemperatur erwärmt und anschließend den Polymerisationsinitiator (vorzugsweise als wäßrige Lösung) im Verlauf von wenigen Stunden unter Aufrechterhaltung der Polymerisationstemperatur kontinuierlich zuführt.

Selbstverständlich besteht auch die Möglichkeit, daß die Vorlage lediglich Wasser umfaßt und die Monomeren parallel zum Initiator kontinuierlich zugeführt werden (vorzugsweise werden die Monomeren in reiner Form zugeführt).

Ferner sind alle Zwischenstufen zwischen den beiden beschriebenen Grenzfällen denkbar.

Die im Rahmen des erfindungsgemäßen Polymerisationsverfahrens resultierenden Polymeren sind im wäßrigen Medium löslich.

Vorzugsweise wählt man den theoretischen Feststoffgehalt (Gewichtsanteil der zu polymerisierenden Monomeren) der resultierenden wäßrigen Polymerisatlösungen möglichst hoch, da dies zu niederen

relativen Restmonomerengehalten führt.

In der Regel liegt der theoretische Feststoffgehalt im Bereich von 20 bis 70, vorzugsweise 40 bis 70 und besonders bevorzugt bei 50 bis 70 Gew.-%. Ganz besonders bevorzugt weist die resultierende wäßrige Polymerisatlösung einen theoretischen Feststoffgehalt von wenigstens 60 Gew.-% auf.

Die nach dem erfindungsgemäßen Verfahren in typischer Weise erreichbaren Restmonomerengehalte liegen überraschend bei Werten von deutlich unter 5 Gew.-%, bezogen auf die Gesamtmenge der zu polymerisierenden Monomeren.

Die Polymerisate selbst können aus ihren wäßrigen Lösungen durch Entfernen des Wassers (z.B. destillativ o. Gefriertrocknung) isoliert werden. Ihr relatives zahlenmittleres Molekulargewicht $M_n$ beträgt üblicherweise 1500 bis 2500.

Bemerkenswerterweise weisen die erfindungsgemäß erhältlichen Polymerisate eine relativ enge Molekulargewichtsverteilung auf. So beträgt das Verhältnis von gewichtsmittlerem zu zahlenmittlerem relativem Molekulargewicht (Uneinheitlichkeit $U = M_w/M_n$) in der Regel 1,5 bis 2,5, vorzugsweise 1,8 bis 2,1.

Die erfindungsgemäß erhältlichen Polymerisate eignen sich insbesondere als Flammschutzmittel, z.B. indem man sie anderen Kunststoffen zumischt.

Ihr besonderer Vorteil liegt einerseits darin begründet, daß sie frei von Halogen sind und in Wasser eine erhöhte Löslichkeit aufweisen. Aufgrund letzterer Eigenschaft können sie problemlos ohne vorherige Isolierung, d.h. unmittelbar als erfindungsgemäß erhältliche wäßrige Polymerisatlösung, wäßrigen Polymerisatdispersionen zugesetzt werden, ohne deren Eigenschaften, insbesondere deren kolloidale Stabilität, wesentlich zu mindern. Ihr Zusatz zu wäßrigen Polymerisatdispersionen führt in der Regel weder zu Stippen - noch zu Koagulatbildung, ermöglicht aber infolge ihrer Wasserlöslichkeit eine homogene Verteilung. Aufgrund des spezifischen Molekulargewichtes wird ferner das Fließvermögen der wäßrigen Polymerisatdispersion nur wenig beeinflußt. Die resultierenden Verfilmungen der die erfindungsgemäß erhältlichen Polymerisate zugesetzt enthaltenden wäßrigen Polymerisatdispersionen verfügen über eine erhöhte Flammfestigkeit, wobei die reduzierte Flüchtigkeit des Flammschutzmittels, die ebenfalls auf dessen spezifischem Molekulargewicht fußt, von Vorteil ist. Bezogen auf das dispergierte Polymerisat, werden die erfindungsgemäßen Polymerisate wäßrigen Polymerisatdispersionen in der Regel in Mengen von 5 bis 50 Gew.-% zugesetzt. Die erfindungsgemäß resultierenden wäßrigen Polymerisatlösungen können wäßrigen Polymerisatdispersionen auch bereits während deren Herstellung nach der Methode der radikalischen wäßrigen Emulsionspolymerisation zugesetzt werden und so gleichzeitig als Schutzkolloid wirken. Hierbei erweist sich ihr auf den verwendeten Initiator zurückgehender Gehalt an Sulfatgruppen als vorteilhaft.

Beispiele (alle Polymerisationen erfolgten unter $N_2$-Atmosphäre)

Beispiel 1

Eine Lösung von 1800 g Vinylphosphonsäuredimethylester in 520 g Wasser wurde auf 80 °C erwärmt. Anschließend wurde innerhalb von 2 h eine Lösung von 54 g Natriumperoxodisulfat in 715 g Wasser kontinuierlich so zugeführt, daß die Polymerisationstemperatur 90 °C betrug. Nach beendeter Zugabe wurde die wäßrige Lösung noch während 2 h bei 90 °C gehalten. Der Feststoffgehalt der resultierenden wäßrigen Lösung L1 betrug 60 Gew.-%.

Beispiel 2

Wie Beispiel 1, die Vorlage umfaßte jedoch eine Lösung von 1200 g Vinylphosphonsäuredimethylester in 1375 g Wasser. Ferner wurde 6 h bei 90 °C nachpolymerisiert. Die resultierende wäßrige Lösung L2 wies einen Feststoffgehalt von 40 Gew.-% auf.

Beispiel 3

Eine Lösung von 180 g Vinylphosphonsäuredimethylester wurde auf 70 °C erhitzt. Anschließend wurden 13 g einer Lösung von 18 g Natriumperoxodisulfat in 240 g Wasser auf einmal zugesetzt. Die Polymerisationstemperatur wurde auf 90 °C eingestellt. Nach 15 min wurden unter Aufrechterhaltung der Polymerisationstemperatur innerhalb von 3 h die Restmenge des Initiatorlösung und parallel dazu innerhalb von 60 min weitere 420 g Vinylphosphonsäuzedimethylester kontinuierlich zugeführt. Anschließend wurde die resultierende wäßrige Lösung noch 2 h bei 90 °C gehalten. Die resultierende wäßrige Lösung L3 wies einen Feststoffgehalt von 60 Gew.-% auf. Die Oberflächenspannung der wäßrigen Lösung betrug nach Verdünnung auf einem Feststoffgehalt von 8 Gew.-% 50,7 mN/m (Ringtensiometer TE1C der Fa. Lauda, 20 °C).

Beispiel 4

Eine Lösung von 540 g Vinylphosphonsäuredimethylester in 520 g Wasser wurde auf 70 °C erhitzt. Anschließend wurden 38 g einer Lösung von 54 g Natriumperoxodisulfat in 720 g Wasser auf einmal zugesetzt. Die Polymerisationstemperatur wurde auf 90 °C eingestellt. Unter Aufrechterhalten der Polymerisationstemperatur wurden nach 15 min innerhalb von 4,5 h der Rest der Initiatorlösung und parallel dazu weitere 1260 g Vinylphosphonsäuredimethylester innerhalb von 60 min kontinuierlich zugeführt. Anschließend wurde die wäßrige Lösung noch 2 h bei 90 °C gehalten. Die resultierende wäßrige Lösung 14 wies einen Feststoffgehalt von 60 Gew.-% auf.

Beispiel 5

Wie Beispiel 4, mit dem Unterschied, daß der Rest der Initiatorlösung innerhalb von 6 h anstelle von 4,5 h kontinuierlich zugeführt wurde. Es resultierte die wäßrige Lösung L5.

Beispiel 6

Wie Beispiel 3, mit dem Unterschied, daß die wäßrige Initiatorlösung nur 15 g Natriumperoxodisulfat in 240 g Wasser umfaßte. Es resultierte die wäßrige Lösung 16.

Beispiel 7

Wie Beispiel 3, mit dem Unterschied, daß die wäßrige Initiatorlösung nur 12 g Natriumperoxodisulfat in 240 g Wasser umfaßte. Es resultierte die wäßrige Lösung L7.

Die wäßrigen Polymerisatlösungen L1 bis L7 sind in der nachfolgenden Tabelle 1 charakterisiert. Dabei wurden die nachfolgenden Abkürzungen verwendet:

| | |
|---|---|
| FG: | Feststoffgehalt der Lösung in Gew.-%, bezogen auf die Lösung; |
| Init.: | Die eingesetzte Initiatormenge, bezogen auf die Gesamtmenge der zu polymerisierenden Monomeren (in Gew.-%). |
| PT: | Polymerisationstemperatur in °C; |
| SZ: | Die Säurezahl; sie entspricht der Menge an KOH in mg, die erforderlich ist, um 1 g der wäßrigen Lösung zu neutralisieren (DIN 53402); |
| pH: | pH-Wert der wäßrigen Lösung; |
| $M_n$: | relatives zahlenmittleres Molekulargewicht des gelösten Polymerisats; |
| $M_w$: | relatives gewichtsmittleres Molekulargewicht des gelösten Polymerisats; |
| U: | $M_w/M_n$ |
| R: | Die enthaltene Menge an Restmonomeren, bezogen auf die insgesamt zu polymerisierende Menge an Monomeren (in Gew.-%); sie wurde gaschromatographisch ermittelt; |
| $\eta$: | Die dynamische Viskosität in mPa•s (Rotationsviskosimeter, 25 °C, Rheomat STV, Fa. Contraves, Meßbecher III nach DIN 53 778) |
| | Die Molekulargewichtsangaben beziehen sich auf Bestimmungen mittels der Gelpermeationschromatographie, und zwar unter nachfolgenden Bedingungen: |
| Die Säulen | G2500 PWXL<br>G3000 PWXL und<br>G4000 PWXL |

der Firma Toso Haas (Stuttgart) wurden in obiger Abfolge in Serie geschaltet. Die ersten beiden Säulen waren mit TSK-Gel einer mittleren Körnung von 6 µm und die letzte Säule war mit einem TSK-Gel einer mittleren Körnung von 10 µm gefüllt. Die Säulenabmessungen betrugen 7,8 mm (Durchmesser) und 300 mm (Länge). Die Chromatographierung erfolgte in Tri(hydroxymethyl)aminomethan-Puffer, der auf pH = 7 eingestellt war. Zur Kalibrierung wurden eng verteilte Polyethylenglykol-Standards nachfolgender relativer Molekulargewicht verwendet:
600, 1470, 4250, 7100, 12600, 23000 und 105000.

Tabelle 1

| Lösung Nr. | Init | FG | PT | SZ | pH | $\eta$ | $M_n$ | $M_w$ | U | R |
|---|---|---|---|---|---|---|---|---|---|---|
| 1 | 3 | 60 | 90 | 9,5 | 2,1 | 165 | 1900 | 3900 | 2 | 2,4 |
| 2 | 3 | 40 | 90 | 10,8 | 1,8 | 13 | 1800 | 3200 | 1,8 | 7,8 |
| 3 | 3 | 60 | 90 | 11,4 | 2,0 | 111 | 1800 | 3400 | 1,9 | 3,4 |
| 4 | 3 | 60 | 90 | 13,3 | 1,9 | 106 | 1900 | 3900 | 2,1 | 1,2 |
| 5 | 3 | 60 | 90 | 14,1 | 2,0 | 106 | 2000 | 4200 | 2,1 | 0,6 |
| 6 | 2,5 | 60 | 90 | 10,5 | 2,7 | 113 | 1700 | 3500 | 2 | 3,1 |
| 7 | 2 | 60 | 90 | 7,9 | 2,2 | 592 | 1800 | 3700 | 2,1 | 5,4 |

Die niedrigen Säurezahlen weisen aus, daß im wesentlichen keine Hydrolyse der Ester erfolgt ist.

Beispiel 8

Eine Lösung von 270 g Vinylphosphonsäuredimethylester wurde auf 70 °C erhitzt. Anschließend wurden 19 g einer Lösung von 30,6 g Kaliumperoxodisulfat in 360 g Wasser auf einmal zugesetzt. Die Polymerisationstemperatur wurde auf 90 °C eingestellt. Unter Aufrechterhalten der Polymerisationstemperatur wurden nach 15 min innerhalb von 4,5 h der Rest der Initiatorlösung und parallel dazu weitere 630 g Vinylphosphonsäuredimethylester innerhalb von 60 min kontinuierlich zugeführt. Anschließend wurde die wäßrige Lösung noch 2 h bei 90 °C gehalten. Die resultierende wäßrige Lösung L8 war wie folgt charakterisiert:

pH: 1,3 R: 4 K-Wert: 10,7

Der Restmonomerengehalt wurde hier und in den nachfolgenden Beispielen mittels $^{31}P$-NMR ermittelt.

Der K-Wert ist eine relative Viskositätszahl, die in Analogie zur DIN 53726 bestimmt wurde. Er beinhaltet hier und in den nachfolgenden Beispielen die Fließgeschwindigkeit von reinem Wasser relativ zur Fließgeschwindigkeit einer 1 gew.-%igen wäßrigen Polymerisatlösung (bei 23 °C).

Der K-Wert charakterisiert das mittlere Molekulargewicht des Polymerisats (vgl. dazu Cellulosechemie, Vol. 13 (1932), S. 58-64, und Kirk-Othmer, Encyclopedia of Chemical Technology, Vol. 23, S. 967-968).

Beispiel 9

Wie Beispiel 8, als Initiator wurden jedoch 25,9 g Ammoniumperoxodisulfat verwendet. Die resultierende wäßrige Lösung L9 war wie folgt charakterisiert:

pH: 1,5 K-Wert: 11,3 R: 4,2

Vergleichsbeispiel 1

Wie Beispiel 8, die wäßrige Initiatorlösung wurde jedoch durch eine wäßrige Suspension von 30,8 g Azo-bis(2-amidino-propan)dihydrochlorid in 360 g Wasser ersetzt, die nicht auf einmal, sondern in drei identischen Portionen im Abstand von 60 min zugesetzt wurde.

Die resultierende wäßrige Lösung VL1 war wie folgt charakterisiert:

pH: 2,8 K-Wert: 10,6 R: 13,8

Beispiel 10

Eine Lösung aus 74 g Natriumvinylsulfonat, 180 g Vinylphosphonsäure und 220 g Wasser wurde bei 70 °C mit 12,8 g einer Lösung aus 18,0 g Natriumperoxodisulfat und 240 g Wasser auf einmal versetzt und die dabei resultierende Lösung anschließend auf 90 °C erhitzt und 15 min bei 90 °C gehalten. Anschließend wurden zeitgleich beginnend unter Aufrechterhaltung der 90 °C weitere 420 g Vinylphosphonsäure (innerhalb von 1 h) und die Restmenge der Initiatorlösung (innerhalb von 3 h) kontinuierlich zugeführt. Nach beendeter Zufuhr wurde das Reaktionsgemisch nach 2 h bei 90 °C gerührt. Die resultierende wäßrige Lösung L10 war wie folgt charakterisiert:

pH: 1,6 R: 3,3 K: 3,5 (hier bezogen auf eine 0,1 gew.-%ige wäßrige Polymerisatlösung)

Vergleichsbeispiel 2

Eine Lösung von 280 g Wasser, 180 g Vinylphosphonsäuredimethylester und 1,7 g einer 70 gew.-%igen wäßrigen tert.-Butylhydroperoxidlösung wurde auf 50 °C erhitzt und anschließend auf einmal mit 5 Gew.-% einer Lösung von 1,2 g Ascorbinsäure und 10 mg Eisen-II-sulfat in 100 g Wasser versetzt. Die Polymerisationstemperatur wurde auf 60 °C eingestellt. Nach 15 min wurden unter Aufrechterhalten der Polymerisationstemperatur innerhalb von 3 h die Restmenge der reduzierenden Lösung und innerhalb von 60 min parallel dazu weitere 420 g Vinylphosphonsäuredimethylester kontinuierlich zugegeben. Anschließend wurde das System noch 1 h bei 60 °C gehalten und nach Abkühlen auf 30 °C mit jeweils 12 g einer 10 gew.-%igen wäßrigen Lösung von tert.-Butylhydroperoxid bzw. Ascorbinsäure auf einmal versetzt und 1 h bei 30 °C gehalten.

Die resultierende wäßrige Lösung VL2 wies einen Feststoffgehalt von lediglich 20 Gew.-% auf (theoret.: 60 Gew.-%). Ihr pH-Wert betrug 1,9.

Vergleichsbeispiel 3

Wie Vergleichsbeispiel 2, anstelle der 1,7 g wäßrige tert.-Butylhydroperoxidlösung wurden jedoch 4 g einer 30 gew.-%igen wäßrigen Wasserstoffperoxidlösung eingesetzt. Die resultierende wäßrige Lösung VL3 wies einen Feststoffgehalt von lediglich 10 Gew.-% auf (theoret.: 60 Gew.-%).

Anwendungsbeispiel

Zu 4300 g einer handelsüblichen 50 gew.-%igen Polymerisatdispersion deren dispergiertes Polymerisat zu 87,5 Gew.-% aus Alkylestern der Acrylsäure, zu 10 Gew.-% aus Acrylnitril und zu 2,5 Gew.-% aus N-Methylolacrylamid in polymerisierter Form aufgebaut war und die einen pH-Wert von 2,5 aufwies, wurden unter Rühren 717 g der Lösung L1 zugetropft. Mit dem Einrühren ging weder Koagulat- noch Stippenbildung einher. Die Verfilmungen der resultierenden wäßrigen Polymerisatdispersion wiesen eine erhöhte Flammschutzfestigkeit auf.

## Patentansprüche

**1.** Verfahren zur Herstellung einer wäßrigen Lösung von Polymerisaten von Vinylphosphonsäureestern, dadurch gekennzeichnet, daß man eine Monomerenzusammensetzung bestehend aus
75 bis 100 Gew.-% wenigstens eines Monomeren der allgemeinen Formel I

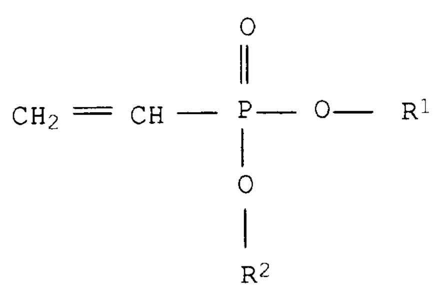

(I),

mit $R^1$, $R^2$ = unabhängig voneinander -H, $-CH_3$ oder $-C_2H_5$, aber nicht gleichzeitig -H,
und/oder eines deren Salze (Monomere a),

0 bis 20 Gew.-% Vinylsulfonsäure und/oder deren Salze (Monomere b) und
0 bis 5 Gew.-% sonstige radikalisch copolymerisierbare Monomere (Monomere c)

- in wäßriger Lösung,
- nach der Methode der radikalischen Polymerisation,
- bei einer Polymerisationstemperatur von 80 bis 150 °C und
- unter Verwendung eines Salzes der Peroxodischwefelsäure als Polymerisationsinitiator polymerisiert.

2. Verfahren nach Anspruch 1, dadurch gekennzeichnet, daß die Polymerisationstemperatur 85 bis 95 °C beträgt.

3. Verfahren nach Anspruch 1 oder 2, dadurch gekennzeichnet, daß die Monomerenzusammensetzung lediglich Vinylphosphonsäuredimethylester umfaßt.

4. Verfahren nach Anspruch 1 bis 3, dadurch gekennzeichnet, daß die Menge an eingesetztem Salz der Peroxodischwefelsäure, bezogen auf die zu polymerisierenden Monomeren, 1 bis 5 Gew.-% beträgt.

5. Verfahren nach Anspruch 1 bis 4, dadurch gekennzeichnet, daß der Gewichtsanteil der zu polymerisierenden Monomeren, bezogen auf den Polymerisationsansatz, 40 bis 70 Gew.-% beträgt.

6. Verfahren zur Herstellung von Polymerisaten von Vinylphosphonsäureestern, dadurch gekennzeichnet, daß man eines der Verfahren gemäß Anspruch 1 bis 5 ausübt und anschließend aus der resultierenden wäßrigen Lösung das Wasser entfernt.

7. Wäßrige Polymerisatlösung, erhältlich nach einem Verfahren gemäß Anspruch 1 bis 5.

8. Polymerisat, das in polymerisierter Form zu
75 bis 100 Gew.-% aus wenigstens einem Monomeren der allgemeinen Formel I

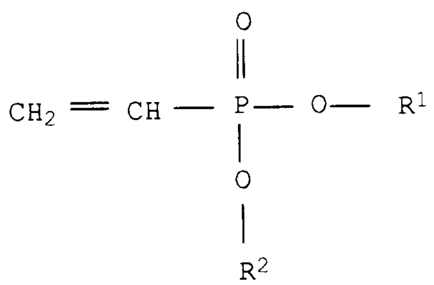

(I),

mit $R^1$, $R^2$ = unabhängig voneinander -H, $-CH_3$ oder $-C_2H_5$, aber nicht gleichzeitig -H,
und/oder eines deren Salze (Monomere a),
0 bis 20 Gew.-% Vinylsulfonsäure und/oder deren Salze (Monomere b) und
0 bis 5 Gew.-% sonstigen radikalisch copolymerisierbaren Monomeren (Monomere c)
aufgebaut ist und bei einer Uneinheitlichkeit der Molekulargewichtsverteilung von 1,5 bis 2,5 ein relatives zahlenmittleres Molekulargewicht von 1500 bis 2500 aufweist.

9. Verwendung der unmittelbaren Verfahrensprodukte erhältlich nach einem Verfahren gemäß Anspruch 1 bis 6 oder eines Erzeugnisses gemäß Anspruch 7 und 8 als Flammschutzmittel.

10. Wäßrige Polymerisatdispersion, enthaltend, bezogen auf das dispergierte Polymerisat, 5 bis 50 Gew.-% wenigstens eines Polymerisats gemäß Anspruch 8.